# EUROPEAN PATENT SPECIFICATION

(11) **EP 1 116 361 B1**
(45) Date of publication and mention of the grant of the patent: **16.06.2004**
(21) Application number: 99947651.8
(22) Date of filing: 22.09.1999
(51) Int. Cl.: H04L 12/46

(54) **COMMUNICATIONS NETWORK BRIDGE**
KOMMUNIKATIONSNETZWERKBRÜCKE
PASSERELLE DE RESEAU DE COMMUNICATION

(30) Priority: 24.09.1998 GB 9820830; 19.03.1999 GB 9906451
(43) Date of publication of application: 18.07.2001
(73) Proprietor: Madge Limited, Little Chalfont, Bucks HP6 6PT (GB)
(72) Inventor: LEA, Martin Roderick, Chalfont St. Peter, Bucks SL9 8TT (GB)
(74) Representative: Finnie, Peter John
(86) International application number: PCT/GB1999/003142
(87) International publication number: WO 2000/018071

(56) References cited:
- EP-A- 0 349 099
- US-A- 5 018 133
- US-A- 5 150 360

## Description

The present invention relates to a bridge for use in a group of bridges in a communications network which operates in accordance with a Spanning Tree Protocol (STP) and to a method of implementing the STP on a network having a group of bridges.

The STP is a method described in the IEEE 802.1D standard for controlling bridging paths through a network. To avoid problems caused by bridging loops in the network, this protocol temporarily eliminates loops by disabling ports so that there is only one possible path for the transmission of data packets across the network. In general, this protocol also aims to create a path that is more efficient and typically has a higher bandwidth than alternative paths.

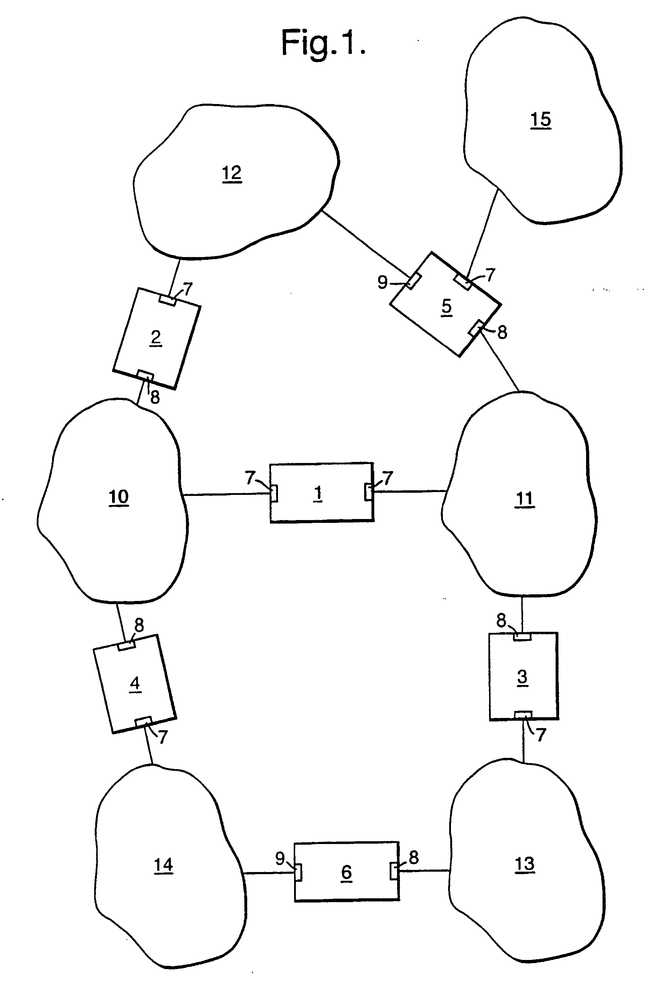

Operation of the STP will now be described with reference to the network system shown in Figure 1. The example network system comprises a number of local area networks (LANs) 10,11,12,13,14,15 which are interconnected via a number of bridges 1,2,3,4,5,6. The bridges, which are provided to transfer data between the different LANs, are physically coupled to the LANs via ports 7,8,9.

Each bridge 1,2,3,4,5,6 is assigned a unique bridge identifier B1,B2,B3,B4,B5,B6 which incorporates a respective bridge priority. The bridge identifier is typically a number, the least significant bits of which are based on the MAC address of the respective bridge. The most significant bits of the identifier represent a bridge priority and this value is either assigned by default or set by a user. The overall priority of the bridge is therefore determined from the entire port identifier. Furthermore, as this is unique, even if the user sets identical priorities for two bridges the overall bridge identifiers are different thereby allowing the protocol to determine one of the bridges to have a higher priority. The bridge having the highest priority, which is indicated by the lowest value of bridge identifier, is designated as the root bridge, which in the present example is the bridge 1.

Each port 7,8,9 of each bridge 1,2,3,4,5,6 is also assigned a unique port identifier, which again incorporates a respective port priority. As in the case of the bridge identifiers, the least significant bits of the port identifier are based on the MAC address of the port, with the most significant bits being based on an assigned priority.

Each port also has an associated path cost component. The path cost components are representative of the port's ability to transfer data. Typically the path cost value is set by default to a pre-set value, but can be re-set by a user to a lower value so as to focus traffic on that particular port (or to a higher value to divert traffic away). Thus a port having a higher bandwidth is assigned a lower cost indicating an easier transfer whereas a lower bandwidth port is assigned a higher path cost component. The path cost components are used to calculate an overall path cost indicating the total cost of transferring data to the root bridge 1.

For each bridge, the ports 8 which are closest to the root bridge 1 are used to forward data to the root bridge and these are therefore known as root ports 8.

The details of each bridge including bridge and port identifiers, bridge and port priorities and the like are stored in an internal memory of the respective bridge.

The path costs are used by the bridges 1,2,3,4,5,6 to determine a designated bridge for each LAN. The designated bridge is the bridge 1,2,3,4,5,6 having the lowest path cost for transferring data from the respective LAN to the root bridge 1. In the present example, the designated bridges are the bridges 2,3,4,5 for the LANs 12,13,14,15 respectively. The ports 7 which couple a designated bridge to the respective LAN are known as designated ports 7.

Any port 9 which is not a root port 8 or a designated port 7 is placed in a blocking mode. This prevents data being transferred via this port 9 thereby removing any loops from the network topology. If identical path costs are determined from a LAN to the root bridge 1, via two different bridges, then the bridge having the highest priority is the designated bridge. As mentioned above, this is determined based on a comparison of the bridge identifiers. If the bridges have the same priority, then the priority of the respective ports is used to determine the designated bridge and the designated port. Again this is determined based on a comparison of the respective port identifiers.

The root bridge 1 and designated bridges 2,3,4,5 are determined by having all the bridges 1,2,3,4,5,6 communicate with each other to determine details of respective path costs and priority information. This is achieved by transmitting configuration Bridge Protocol Data Units (hereinafter referred to as BPDUs) between the bridges, and having each bridge maintain a record of the information contained therein. This is stored in the memory in the form of topology data which indicates the status of each port of the respective bridge along with an indication of the root bridge.

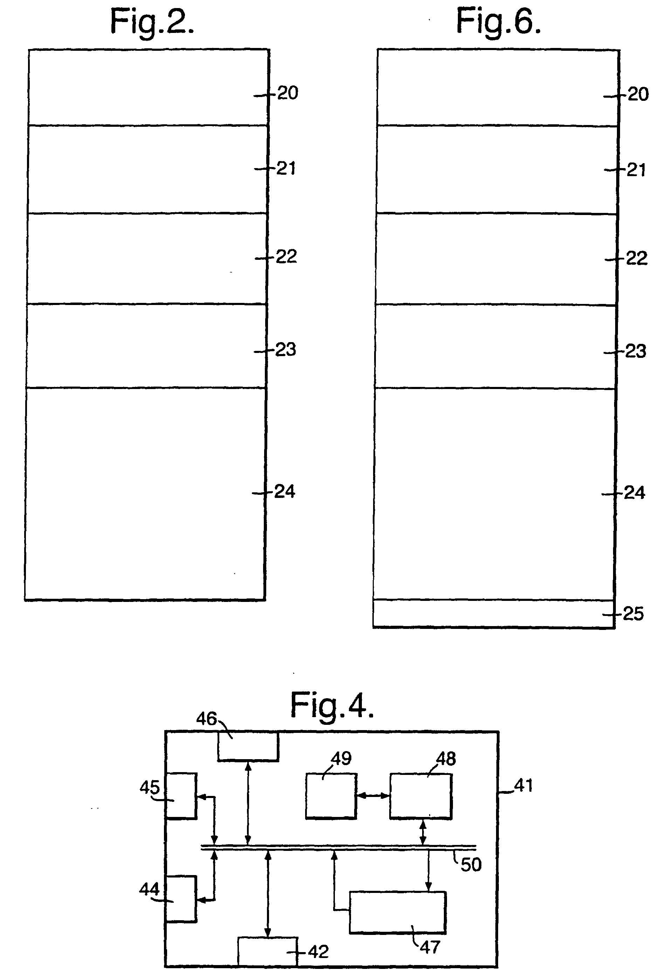

An example of such a BPDU data packet is shown in Figure 2. This includes a bridge field 20, which indicates the bridge identifier B1,B2,B3,B4,B5,B6 of the bridge sending the BPDU, a root field 21 which indicates the bridge identifier B1 of the root bridge 1, a port field 22, which indicates the port identifier of the port 7,8,9 with which the BPDU is associated and a root path cost field 23 which indicates the path cost back to the root bridge 1 from the respective port 7,8,9. There are also additional fields indicated generally at 24, although these are not relevant for the purposes of the present description.

Initially, each bridge 1,2,3,4,5,6 assumes it is the root bridge, and accordingly, it generates a BPDU inserting its own bridge identifier B1,B2,B3,B4,B5,B6 in the root field 21. Similarly a respective port 7,8,9 is identified in the port field 22, and a value of zero is inserted in the root path cost field 23, as the cost of transferring data from the bridge to itself is zero. The generated BPDU is then transmitted to all the other bridges via the LANS 10,11,12,13,14.

As the BPDU passes through a port 7,8,9 the path cost component associated with the port is added into the root path cost field 23. Accordingly, if a BPDU is generated by the root bridge 1 and is transferred via the LAN 11 to the bridge 3, then the root path cost field 23 is modified as the BPDU passes through the port 7 of the root bridge 1 and the port 8 of the bridge 3. The total value in the root path cost field 23 therefore represents the cost of transferring data via the ports 8,7 of the bridges 3,1, thereby representing the total cost of transferring data from the bridge 3, to the root bridge 1.

Upon receipt of a BPDU, each bridge will compare the priority of the bridge identifier B1,B2,B3,B4,B5,B6 indicated in the root field to the priority of the bridge identifier B1,B2,B3,B4,B5,B6 of the root bridge indicated in the topology data. If the indicated root bridge has a higher priority than the bridge identified in the BPDU, the bridge will discard the BPDU. If no root bridge is indicated in the topology data, the bridge will compare the root bridge identifier indicated in the BPDU with its own identifier and if its own identifier has the higher priority, the bridge will generate a new BPDU placing its own bridge identity in the root field. This is then transmitted onto the network in preference to the received BPDU.

Thus for example, if the bridge 1 received a BPDU from any other bridge, it would determine that the value of its own bridge identifier B1 is lower than that of the other bridge identifiers B2,B3,B4,B5,B6, and therefore that the priority of the bridge 1 is greater than that of the other bridges 2,3,4,5,6. Accordingly, any BPDU indicating any other bridge identifier B2,B3,B4,B5,B6 in the root field would be discarded and replaced.

If however the bridge identifier in the root field 21 has a higher priority, then the bridge will update the topology data stored in the memory and generate a new BPDU. The new BPDU will include at least some of the topology details from the received BPDU, along with the bridge's own bridge identifier in the bridge field 21. The newly generated BPDU is then transmitted to all the other bridges accordingly.

In order to determine the designated bridge B1,B2,B3,B4,B5,B6 for a given LAN, the path cost indicated in the BPDU of bridges coupled to the LAN are compared. The bridge having the lowest path cost is then selected.

Thus, in the present example, the bridge 6 will generate a BPDU indicating the path cost of transferring data from the LAN 14 to the root bridge 1. This will be transmitted to the bridge 4 which will compare it to its own path cost and determine its own path cost as lower. Accordingly, the bridge 4 will generate a response BPDU which is returned to the bridge 6. Upon receiving this response BPDU, the bridge 6 will determine that it is not the designated bridge for the LAN 14 and will accordingly block the port 9. Both bridges 4,6 update the topology data accordingly.

If the path costs are identical, then the bridge having the higher priority (ie lower value bridge identifier) becomes the designated bridge. If the bridges have identical priority numbers, then the relative priority of the ports 7,9 of the bridges 4,6 are used.

This process is repeated throughout the network until all the bridges are configured such that there are no loops within the network.

In addition to this, in order to be able to update the network topology to account for any failures in the network the topology date stored in the bridges must be updated. In order to do this, the root bridge is configured by the STP to generate a BPDU at regular intervals (such as every two seconds). The other bridges update their topology data in accordance with the information contained in these BPDUs (which often remain the same from one frame to the next). If however the root bridge does not generate a BPDLJ, or this is at least not received by a bridge, then the affected bridge or bridges wait for a predetermined timeout interval (typically 15 seconds) before generating their own BPDUs thereby allowing an alternative network configuration to be determined.

As with all networks, it is desirable to be able to achieve optimum transfer rates through the network. In the case of networks operating a Spanning Tree Protocol, the networks often consist of a number of LANS interconnected via a number of bridges. Unfortunately, in order to transfer data from one LAN to another, data often has to be transferred via several bridges and several different LANs. The transfer through the local area networks can cause severe delays to the transfer of data.

Thus, for example, in the example of Figure 1, in order to transfer data from the LAN 15 to the LAN 14, the data must be transferred via the bridge 5, the LAN 11, the bridge 1, the LAN 10 and the bridge 4, with the transfer through the LANs 10 and 11 causing unnecessary delays.

Furthermore the STP sometimes operates to disable a port of a bridge which may offer a better route through the network. Currently, this can only be overcome by altering the respective priority numbers of the bridges and the ports. This is a complicated task which in practice may not be physically achievable in many larger networks.

US 5,018,133 A discloses a group of bridges using STP where a bridge is set as the root bridge.

In accordance with a first aspect of the present invention, we provide a bridge for use in a group of bridges in a communications network, the communications network having a number of communications devices coupled together via a number of bridges and operating in accordance with a Spanning Tree Protocol (STP), the bridge comprising:
a number of interconnectable ports;
a group port which couples the grouped bridge to a corresponding group port of at least one other grouped bridge via a group link, the group link being provided to allow ports on different grouped bridges to be interconnected; and,
a processor, the processor being adapted to communicate with other bridges on the network using Bridge Protocol Data Units (BPDUs) to allow an optimum path through the network to be determined wherein each BPDU includes a bridge identifier representative of the bridge which generated the BPDU, and wherein the optimum path is determined in accordance with path cost components which represent the ability of respective ports to transfer data, characterised in that the group is assigned a path cost component of zero.

Thus the present invention provides a bridge which can be linked to one or more other bridges according to the invention via a dedicated group link. The group link is only used for transferring data between the bridges, thereby removing the need for data to be transferred between bridges across other communication devices such as local area networks, or the like. The bridges according to the invention can be connected to standard network bridges in the normal way.

In accordance with a second aspect of the present invention, we provide a method of implementing a Spanning Tree Protocol (STP) on a communications network including a number of grouped bridges, the communications network having a number of communications devices coupled together via a number of bridges, each grouped bridge having a number of interconnectable ports including a group port which couples the grouped bridge to a corresponding group port of another grouped bridge via a group link, the group link being provided to allow ports on different grouped bridges to be interconnected, wherein the STP causes bridges in the network to communicate with each other using Bridge Protocol Data Units (BPDUs) to determine an optimum path through the network, the optimum path being determined in accordance with path cost components representative of the ability of respective ports to transfer data, wherein each BPDU includes a bridge identifier representative of the bridge which generated the BPDU, characterised in that the method comprises:
setting the path cost component of the group port equal to zero;
setting the bridge identifier of each bridge in the group to be equal; and,
each time a bridge in the group receives a BPDU via a port other than the group port, causing the bridge to generate and transmit a new BPDU to the group port, the new BPDU having the bridge identifier and the port identifier of the received BPDU.

Accordingly, we further provide a method of implementing a spanning tree protocol in the communications network which includes a number of grouped bridges. The above described method allows the spanning tree protocol to be implemented such that it does not cause the group link, which links the bridges in the group, to be disabled. This is achieved by effectively treating each bridge in the group as the same bridge so that the Spanning Tree Protocol is not aware that the group link exists, and therefore cannot disable it.

Accordingly, the processor of the bridge is typically adapted to set the path cost components of the group equal to zero. Furthermore, when a BPDU is received via a port other than the group port, the bridge generates a new BPDU based on the received BPDU and having the bridge identifier and the port identifier of the received BPDU, which is then transmitted to the other bridges in the group, via the group port.

Preferably the bridge will include a store which stores the bridge identifier and the path cost component associated with each respective port. However, these may alternatively be stored at other locations on the network.

Typically the bridge includes a transfer store which stores data received at one of the ports before transferring the data to one or more of the other ports.
Whilst a system which transfers the data directly from one port to another may be used in some cases, it is preferable to allow the data to be stored temporarily in order to avoid the loss of data due to incorrect transfer.

Typically the STP uses a port identifier associated with each bridge port, the port identifier representing the priority of the port. In this case the port identifier of each port in the bridge is preferably stored in the store.

In one example of the present invention, when a bridge in the group generates a new BPDU, this is a group BPDU which further includes an indication of the port identifier of the bridge port at which the received BPDU was received. It will be realised that the use of a new type of group BPDU may not be required in all circumstances, although this will typically depend on the construction of the network upon which the modified STP is to operate. Furthermore, whilst the priority of the port is typically represented by the port identifier, this is not essential and alternatively separate numbers may be used. In either case, whilst a high priority is generally indicated by a low number, a high number may be used instead.

The bridge identifiers of each bridge in the group of bridges are identical. This allows the STP to treat the bridges as a single bridge for the purposes of determining paths through the network.

In the standard STP operation, the bridge identifier is based on the MAC address of the respective bridge. Typically, each bridge has a respective MAC address, however the bridge identifier of each grouped bridge is typically determined in accordance with the MAC address for one of the bridges in the group. Alternatively, however an entirely separate bridge identifier could be used.

In the present invention, the STP is preferably a modified version of the IEEE 802.1D standard.

It will be realised by a person skilled in the art that the communications devices of the communications network may consist of self-contained networks such as local area networks, or the like or alternatively they may consist of end stations, or a combination of both of the above.

An example of the present invention will now be described with reference to the accompanying drawings, in which:-
Figure 1 is a schematic representation of a communications network according to the prior art;
Figure 2 is an example of a BPDU used by Spanning Tree Protocols;
Figure 3 is a schematic representation of a communications network including a stack of bridges according to the present invention;
Figure 4 is a schematic representation of one of the bridges of the stack of bridges shown in Figure 3;
Figure 5 is a schematic representation of a communications network including a stack of bridges according to a second example of the present invention; and,
Figure 6 is an example of a stack BPDU generated by the stack of bridges shown in Figure 5.

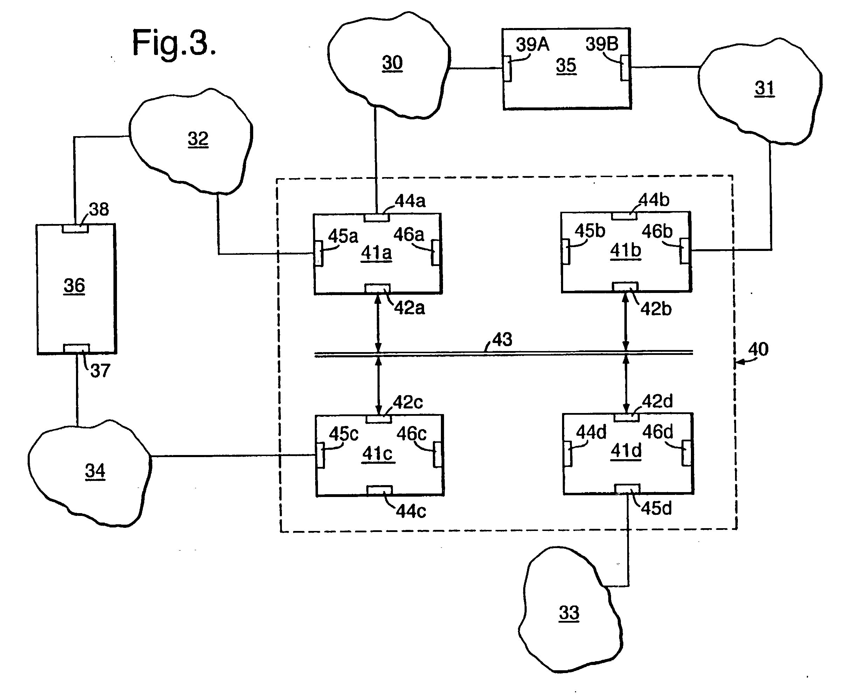

The network system shown in Figure 3 includes a number of local area networks (LANs) 30,31,32,33,34 which are coupled together via two bridges 35,36 and a group or stack of bridges 40. The stack of bridges is a group of four bridges 41A,41B,41C,41D having a number of respective ports 42 (A-D) , 44 (A-D) , 45(A-D), 46(A-D). The bridges 41A,41B,41C,41D are coupled to a dedicated stack link 43 via the respective ports 42A,42B,42C,42D. The LANs 30,31,32,33,34 are coupled to the bridges 35,36,41A,41B,41C,41D via the ports 37,38,39A,39B,44,45,46 as shown.

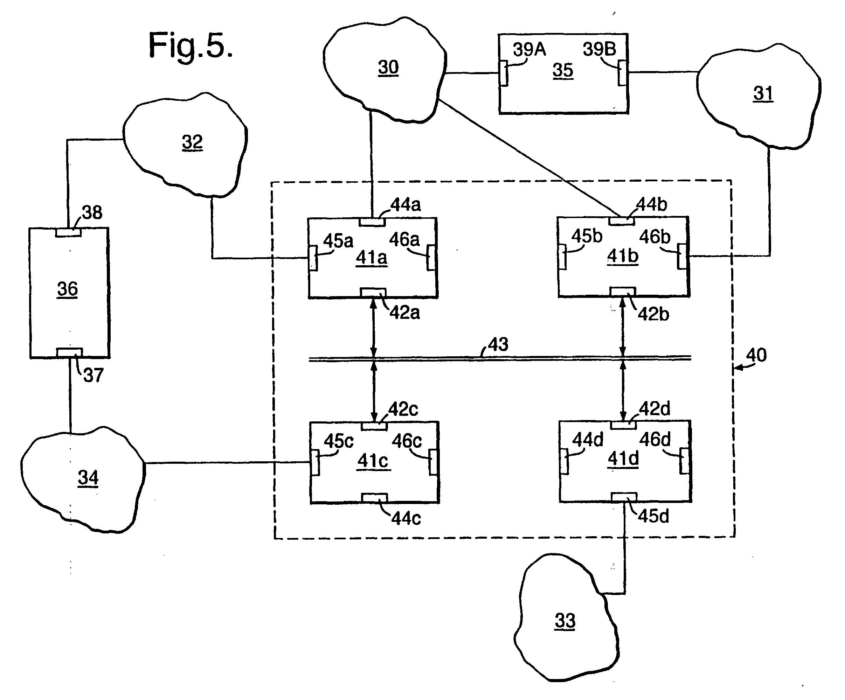

An example of a bridge 41, which may be used as one of the bridges 41A,41B,41C,41D, of the stack of bridges 40, is shown in more detail in Figure 4. As shown, each of the ports 42,44,45,46 of the bridge 41 are coupled together via a bus 50.

Also coupled to the bus 50 is a First In First Out (FIFO) buffer memory 47, which is used to temporarily store data which is being transferred between the ports 42,44,45,46. There is also provided a processor 48 which controls the operation of the bridge 41 as well as implementing the STP. The processor is coupled to a memory 49 which stores details of the network topology in the form of topology data as required by the BPDU.

Operation of the network to implement a Spanning Tree Protocol is substantially as described with respect to Figures 1 and 2 for the standard Spanning Tree Protocol. Accordingly, the processors 48 of the bridges 41, and respective processors (not shown) of the bridges 35,36 communicate with each other, using BPDUs to determine the current network topology. This information is stored in the memory 49 of each bridge 41, and in the equivalent memory of the bridges 35,36, and is used to maintain a single path through the network.

For the purposes of the present example, the root bridge is assumed to be the bridge 35.

As will be realised, the stack link 43 is provided solely for the purpose of transferring data between the bridges 41A,41B,41C,41D and it is therefore preferable to transfer data via the stack link, as opposed to via any other route. In order to achieve this, the STP is implemented so as to disable any alternative paths connecting the bridges 41A,41B,41C,41D in the stack 40.

Thus, in the present example, the STP will cause the network to disable the path via the LANs 32,34 and the bridge 36 which links the bridges 41A,41C. This ensures that all data is transferred between the bridges 41A,41C via the stack link.

In order to achieve this, the network must determine that the lowest cost path from the LAN 34 to the root bridge 35 is via the bridge 41C and the stack link 43, as opposed to via the bridge 36 and the LAN 32.

Accordingly, the stack ports 42A,42B,42C,42D are assigned a path cost component of zero such that there is no path cost for transferring data between the bridges 41A,41B,41C,41D via the stack link 43. As a result, the transfer of data via the stack link does not add to the overall cost of paths back to the root bridge 35.

However in normal STP, a zero path cost cannot occur as the transfer of data via any port will add a path cost component to the overall path cost. Accordingly, if a zero path cost is indicated, the STP interprets this as if a bridge is transferring data to itself.

Accordingly, with a zero path cost defined for the transfer of data via the stack link, the STP interprets the transfer of data between bridges 41A,41B,41C,41D as the transfer of data from a bridge to itself.

In order for the STP to operate, each of the bridges 41A,41B,41C,41D therefore has to be assigned the same bridge identifier, such that the STP interprets the stack 40 to be a single bridge.

In normal STP, the bridge identifiers are based on a modified version of the MAC address of each respective bridge. Accordingly, in the present invention, the bridge identifier of each of the bridges 41A,41B,41C,41D is based on the MAC address of one of the bridges 41A,41B,41C,41D. Thus for example, each bridge would be assigned the identifier B41A based on the MAC address 41A of bridge 41A.

As will be appreciated, this is either achieved automatically by the processors 48 of the bridges 41, or the identifiers are pre-programmed into the memory 49 of the bridges 41.

A further complication however is that normal STP does not allow for a bridge to receive a BPDU from itself. Under normal STP operation, when a bridge generates a BPDU, it will include its own bridge identifier in the bridge field 20. To overcome this, the bridges 41A,41B,41C,41D are designed to respond to any BPDU received at one of the ports 44,45,46 by generating a new BPDU which includes the bridge identifier from the bridge field 20 of the received BPDU. This new BPDU is then transmitted via the stack link 43 to the other bridges 41A,41B,41C,41D in the stack.

Thus, in the present example, if the bridge 35 generates a BPDU, this indicates its own bridge identifier B35 in both the bridge field 20 and the root field 21. The BPDU is then transmitted to the stack of bridges 40. Assuming the network is still in the process of determining the desired network topology, then the BPDU will be received by bridges 41A,41B on the respective ports 44,46.

Once the bridges 41A,41B have made appropriate amendments to the topology data stored in the respective memories 49, each bridge generates a new BPDU which includes the bridge identifier B35 in the bridge and root fields 20,21. In this case, because no modification of the data has occurred, the entire contents of the new BPDU is identical to that of the received BPDU. The BPDU is transferred via the stack link 43 to each of the other bridges in the stack 40. In this case, the bridges 41A,41B will receive a second copy of the BPDU which will be ignored as the data in the BPDU is identical to the topology data already stored in the memory 49. The bridges 41C,41D however will receive the unmodified BPDU and act as though it were received directly from the bridge 35.

This ensures that each bridge 41A,41B,41C,41D stores the same topology data and therefore effectively acts as part of a single bridge.

In order to be able to transfer data successfully around the network, this means that each port 44,45,46 of each bridge 41A,41B,41C,41D must have a respective unique port identifier. As a result of this, the stack of bridges 40 appears to the remainder of the network as though it is a single bridge with a large number of ports. This therefore prevents the stack link 43 from being disabled due to the STP.

In the case in which the stack of bridges 40 becomes designated as the root bridge, the only modification to the STP is that any Topology Change Notification BPDUs (TCN) (a type of BPDU known in the art) must propagate to each bridge 41A,41B,41C,41D in the stack of bridges 40. Each bridge will then generate its own respective BPDUs which are output via the ports 44,45,46 onto the remainder of the network, and which now include a flag indicating a topology change has occurred.

An example of the implementation of the modified STP to determine a network configuration will now be described.

Firstly, as mentioned above, the bridge 35 has the highest priority, as indicated by the respective bridge identifier, and this is therefore determined to be the root bridge 35. As a result the ports 39A,39B of the bridge 35 become the designated ports for the respective LANs 30,31.

Next the STP operates to determine the root ports of the bridges 36,41A,41B,41C,41D. Assuming that the path cost of the route via port 44A and port 39A is higher than that of the route via port 46B and port 39B, then as the ports 42A,42B do not add to the path cost component, then the port 42A becomes the root port for the bridge 41A. Similarly, the ports 46B,42C,42D are the root ports of the bridges 41B,41C,41D respectively.

If the path cost of the route via the ports 44A and 39A been equal to the path cost of the route via the ports 46B and 39B, then the root port of the bridge 41A would be determined on the basis of which port 39A,39B had the higher priority. This is determined by comparing the respective port identifiers of the ports, with the higher priority port being indicated by the port having the lower value of port identifier. Thus, for example, if the port 39B has the lower value identifier then it has the higher priority. Accordingly, the port 42A of the bridge 41A becomes the root port.

It will be realised that alternatively a high value identifier could be used to indicate a high priority.

As the port 44A is neither a designated nor a root port, it is placed in a blocking state, therefore removing the loop defined by the bridges 41A,41B,35, the LANs 30,31 and the stack link 43.

As can be seen, in this case, the stack of bridges 40 is effectively one overall bridge with a single root port which is the root port 46B.

Similarly, the network determines the designated bridges for the LANs 32,33,34 to be the bridges 41A, 41D, 41C with these bridges having respective designated ports 45, as shown.

Finally, the bridge 36 includes a root port 38 and a port 37 which is neither a root port nor a designated port. Accordingly, the bridge 36 operates to block the port 37 thereby disabling the link to the LAN 34.

It will be appreciated, that in addition to the bridges 41 described above, the present invention must utilise an appropriately modified version of the IEEE 802.1D Spanning Tree Protocol standard.

A second example of the present invention will now be described with reference to Figures 5 and 6. It should be noted that the majority of the components are identical to those shown in Figures 3 and 2 respectively. Furthermore, in view of the similarities between the two examples, only the differences in the operation of the first and second examples will be described.

The network shown in Figure 5 is identical to that shown in Figure 3 except for the addition of a connection from the LAN 30 to the port 44B of the bridge 41B.

The system will generally operate as described above to configure the network. However, in contrast to the first example, when the bridges 41A,41B,41C,41D are communicating with each other via the stack link 43, to transfer topology data, this is achieved by transferring modified stack BPDUs instead of the standard BPDUs.

The use of modified stack BPDUs is intended to overcome the problem that arises when one of the LANs in the network is connected to two different bridges 41A,41B,41C,41D in the stack of bridges 40. This problem will now be described for the network arrangement shown in Figure 5.

Firstly, when the bridge 35 generates a BPDU, this is transferred via the port 39A to the LAN 30. The LAN 30 then copies the BPDU to the bridge 41A, via the port 44A, and to the bridge 41B, via the port 44B.

If the system operates as described above with respect to the first example, the bridges 41A,41B then generate a new BPDU which is transferred via the stack link 43 to each other bridges 41A,41B,41C,41D in the stack of bridges 40.

Accordingly, the bridge 41A receives two identical copies of the BPDU generated by the bridge 35, with the first copy being received by the port 44A and the other copy being received from the bridge 41B, via the port 42A. Similarly, the bridge 41B would also receive two identical copies of the BPDU via the ports 42B and 44B.

In this case, because the path cost components, the bridge identifiers, the root bridge identifiers and the port identifiers of the BPDUs received via the ports 44A,42A are identical, then the bridge 41A is unable to select one of the ports 44A,42A to be the root port. Similarly, the bridge 41B is unable to select one of the ports 42B,44B to be the root port. In this case, the system would generally attempt to block either no ports or all ports and consequently fail.

As mentioned above, this problem is overcome by modifying the stack of bridges 40, such that the bridges 41A,41B,41C,41D communicate with each other using modified stack BPDUs.

An example of a suitably modified stack BPDU is shown in Figure 6. In this case, in addition to the bridge field 20, the root field 21, the port field 22, the root path cost field 23, and the additional fields 24, there is provided a received port identifier field 25. The received port identifier field 25 is used to indicate the port via which the BPDU, which the stack BPDU is based upon, was received.

Thus, in the abovementioned example, the bridge 35 generates a BPDU which is transferred via the LAN 30 to each of the bridges 41A,41B. Upon receipt of a BPDU at the port 44A, the bridge 41A will generate a stack BPDU copying the data contained in fields 20,21,22,23,24 of the received BPDU and adding the port identifier of the port 44A into the received port identifier field 25.

Thus, the stack BPDU will include the bridge identifier B35 in both the bridge field 20 and the root field 21, together with the port identifier of the port 39A in the port field 22. Respective path cost components would also be included in the root path cost field 23. In addition to this, the port identifier of the port 44A is also added to the received port identifier field 25.

As described above, the bridge 41B also receives a copy of the BPDU. In this case, the bridge 41B generates a stack BPDU which again includes identical information in the fields 20,21,22,23,24. However, in contrast to the stack BPDU generated by the bridge 41A, the stack BPDU generated by the bridge 41B includes the port identifier of the port 44B in the received port identifier field 25. The stack BPDUs are then exchanged via the stack link 43.

When the STP operates to determine the root port of the bridge 41A, it will determine that two possible routes exist from the bridge 41A to the root bridge 35, via the LAN 30. The first is represented by the BPDU received via the port 44A, and the second is represented by the stack BPDU received via the port 42A.

In this case, the two routes have identical path cost components because the ports 42A,42B do not add path cost components to the root path cost field 23. Furthermore, both the BPDU and the stack BPDU received by the bridge 41A include the bridge identifier B35 in the bridge field and the port identifier of the port 39A in the port field 22.

However, by analysing the received port identifier field 25 of the stack BPDU, the bridge 41A can determine that the associated BPDU was received via the port 44B. Furthermore, the bridge 41A determines that the other BPDU was received via the port 44A.

Each of the ports of the stack of bridges have respective unique port identifiers and therefore respective unique port priorities. Accordingly, the bridge 41A operates to compare the port identifiers of the ports 44A,44B so as to determine which of the ports 44A,44B has the higher priority. Once this has been determined, an appropriate root port is selected.

Thus, for example if the port 44B has the higher priority, then the port 42A becomes the root port, whereas if the port 44A has the higher priority, then the port 44A becomes the route port.

In any event, as described with respect to the first example, the bridge 41A must also compare these routes to the route via the stack link 43, the port 46B and the LAN 31 to the root bridge 35.

As will be appreciated, the modification set out with respect to the second example need only be implemented if one of the LANs is to be coupled to two different bridges in the stack bridge network.

## Claims

1. A bridge (41) for use in a group of bridges (40) in a communications network, the communications network having a number of communications devices coupled together via a number of bridges and operating in accordance with a Spanning Tree Protocol (STP), the bridge comprising:
a number of interconnectable ports (44,45,46);
a group port (42) which couples the grouped bridge to a corresponding group port of at least one other grouped bridge via a group link (43), the group link (43) being provided to allow ports on different grouped bridges to be interconnected; and,
a processor (48), the processor being adapted to communicate with other bridges on the network using Bridge Protocol Data Units (BPDUs) to allow an optimum path through the network to be determined, wherein each BPDU includes a bridge identifier representative of the bridge which generated the BPDU, and wherein the optimum path is determined in accordance with path cost components which represent the ability of respective ports to transfer data, **characterised in that** the group port (42) is assigned a path cost component of zero.

2. A bridge (41) according to claim 1, wherein the processor (48) is adapted to set the path cost component of the group port (42) equal to zero and each time a bridge in the group receives a BPDU via a port other than the group port, to cause the bridge to generate and transmit a new BPDU to the group port (42), the new BPDU having the bridge identifier and the port identifier of the received BPDU.

3. A bridge (41) according to claim 2, the bridge including a store (49) which is adapted to store the bridge identifier and the path cost component associated with each respective port.

4. A bridge according to claim 3, wherein the STP is adapted to use a port identifier associated with each bridge port, the port identifier representing the priority of the port, and wherein the port identifier of each port in the bridge is stored in the store (49).

5. A bridge (41) according to claim 4, wherein the new BPDU is a group BPDU which further includes an indication of the port identifier of the bridge port at which the received BPDU was received.

6. A bridge (41) according to any of the preceding claims, wherein the bridge includes a transfer store (47) which is adapted to store data received at one of the ports before transferring the data to one or more of the other ports.

7. A group of bridge (40) comprising a number of bridges (41a-d) according to any of claims 1 to 6, the bridges being coupled via a group link (43) which is adapted to interconnect the group ports on different bridges in the group.

8. A group of bridges (40) according to claim 7 wherein the bridge identifier of each bridge in the group of bridges is identical.

9. A group of bridges (40) according to claim 8, wherein each bridge has a respective MAC address, the bridge identifier of each grouped bridge being determined in accordance with the MAC address of one of the bridges in the group.

10. A group of bridges (40) according to any of claims 7 to 9, when dependent on claim 5, wherein the port identifiers are different for each bridge port of each grouped bridge.

11. A method of implementing a Spanning Tree Protocol (STP) on a communications network including a number of grouped bridges (41), the communications network having a number of communications devices coupled together via a number of bridges, each grouped bridge having a number of interconnectable ports (42,44,45,46) including a group port (42) which couples the grouped bridge to a corresponding group port of another grouped bridge via a group link (43), the group link (43) being provided to allow ports on different grouped bridges to be interconnected, wherein the STP causes bridges in the network to communicate with each other using Bridge Protocol Data Units (BPDUs) to determine an optimum path through the network, the optimum path being determined in accordance with path cost components representative of the ability of respective ports to transfer data, wherein each BPDU includes a bridge identifier representative of the bridge from which the BPDU was received, **characterised in that** the method comprises:
setting the path cost component of the group port equal to zero;
setting the bridge identifier of each bridge in the group to be equal; and,
each time a bridge (41) in the group (40) receives a BPDU via a port other than the group port, causing the bridge (41) to generate and transmit a new BPDU to the group port, the new BPDU having the bridge identifier and the port identifier of the received BPDU.

12. A method according to claim 11, wherein each grouped bridge (41) has a respective MAC address, the bridge identifier of each bridge in the group being determined in accordance with the MAC address of one of the bridges in the group.

13. A method according to claim 11 or claim 12, wherein the STP uses a port identifier associated with each bridge port, the port identifier representing the priority of the port, the method further comprising assigning a unique port identifier to each port in the group of bridges (40).

14. A method according to claim 13, wherein the new BPDU is a group BPDU which further includes an indication of the port identifier and/or the port priority number of the bridge port at which the received BPDU was received.

15. A method according to any of claims 11 to 14, wherein the STP is defined by the IEEE 802.1D standard.

## Patentansprüche

1. Brücke (41) zur Verwendung in einer Gruppe von Brücken (40) in einem Kommunikationsnetzwerk, wobei das Kommunikationsnetzwerk eine Anzahl von Kommunikationseinrichtungen aufweist, die über eine Anzahl von Brücken miteinander gekoppelt sind und gemäß einem Spanning Tree Protocol (STP) betrieben werden, wobei die Brücke enthält:
eine Anzahl von untereinander verbindbaren Ports (44, 45, 46);
einen Gruppenport (42), der die gruppierte Brücke über eine Gruppenverbindung (43) mit einem entsprechenden Gruppenport von wenigstens einer anderen gruppierten Brücke koppelt, wobei die Gruppenverbindung (43) dazu gedacht ist, Ports auf verschiedenen gruppierten Brücken untereinander zu verbinden; und
einen Prozessor (48), welcher dazu ausgelegt ist, unter Verwendung von Brückenprotokol-Dateneinheiten (Bridge Protocol Data Units, BPDUs) mit anderen Brücken im Netzwerk zu kommunizieren, um zu ermöglichen, dass ein optimaler Pfad durch das Netzwerk bestimmt wird, wobei jede BPDU einen Brückenidentifizierer enthält, der für die Brücke steht, die die BPDU erzeugt hat, und wobei der optimale Pfad gemäß Pfadkostenkomponenten bestimmt wird, welche die Fähigkeit der jeweiligen Ports zum Datentransfer repräsentieren, **dadurch gekennzeichnet, dass** dem Gruppenport (42) eine Pfadkostenkomponente von Null zugeordnet ist.

2. Brücke (41) nach Anspruch 1, bei welcher der Prozessor (48) dazu ausgelegt ist, die Pfadkostenkomponente des Gruppenports (42) auf Null zu setzen und die Brücke dazu zu veranlassen, jedes Mal wenn eine Brücke in der Gruppe über einen anderen Port als den Gruppenport eine BPDU empfängt, eine neue BPDU zu erzeugen und an den Gruppenport (42) zu übertragen, wobei die neue BPDU den Brückenidentifizierer und den Portidentifizierer der empfangenen BPDU aufweist.

3. Brücke (41) nach Anspruch 2, welche einen Speicher (49) enthält, der dazu ausgelegt ist, den Brückenidentifizierer und die jedem Port zugeordnete Pfadkostenkomponente zu speichern.

4. Brücke (41) nach Anspruch 3, wobei das STP dazu ausgelegt ist, einen Portidentifizierer zu verwenden, der jeder der Brückenports zugeordnet ist, wobei der Portidentifizierer die Priorität des Ports repräsentiert und wobei der Portidentifizierer von jedem Port in der Brücke in dem Speicher (49) gespeichert ist.

5. Brücke (41) nach Anspruch 4, wobei die neue BPDU eine Gruppen-BPDU ist, welche ferner ein Anzeichen für den Portidentifzierer des Brückenports enthält, bei dem die empfangene BPDU empfangen wurde.

6. Brücke (41) nach einem der vorhergehenden Ansprüche, wobei die Brücke einen Transferspeicher (47) enthält, der dazu ausgelegt ist, die an einem der Ports empfangenen Daten zu speichern, bevor die Daten an einen oder mehrere der anderen Ports übertragen werden.

7. Gruppe von Brücken (40), welche eine Anzahl von Brücken (41a-d) gemäß einem der Ansprüche 1 bis 6 umfasst, wobei die Gruppen über eine Gruppenverbindung (43) gekoppelt sind, welche dazu ausgelegt ist, die Gruppenports auf verschiedenen Gruppen in der Brücke untereinander zu verbinden.

8. Gruppe von Brücken (40) nach Anspruch 7, bei welcher die Brückenidentifizierer von allen Brücke in der Gruppe von Brücken identisch sind.

9. Gruppe von Brücken (40) nach Anspruch 8, bei welcher jede Brücke eine entsprechende MAC-Adresse aufweist, wobei der Brückenidentifizierer jeder gruppierten Brücke entsprechend der MAC-Adresse von einer der Brücken in der Gruppe bestimmt wird.

10. Gruppe von Brücken (40) nach einem der Ansprüche 7 bis 9, sofern auf Anspruch 5 rückbezogen, bei welcher die Portidentifizierer für jeden Brückenport jeder gruppierten Brücke unterschiedlich sind.

11. Verfahren zum Implementieren eines Spanning Tree Protocols (STP) auf einem Kommunikationsnetzwerk mit einer Anzahl von gruppierten Brücken (41), wobei das Kommunikationsnetzwerk eine Anzahl von Kommunikationseinrichtungen aufweist, die über eine Anzahl von Brücken miteinander gekoppelt sind, wobei jede gruppierte Gruppe eine Anzahl von untereinander verbindbaren Ports (42, 44, 45, 46) einschließlich eines Gruppenports (42) aufweist, welcher die gruppierte Brücke über eine Gruppenverbindung (43) mit einem entsprechenden Gruppenport einer anderen gruppierten Gruppe koppelt, wobei die Gruppenverbindung (43) dazu gedacht ist, zu ermöglichen, dass Ports auf verschiedenen gruppierten Brücken untereinander verbunden werden können, wobei das STP die Gruppen im Netzwerk dazu veranlasst, miteinander unter Verwendung von Brückenprotokoll-Dateneinheiten (Bridge Protocol Data Units, BPDUs) zu kommunizieren, um einen optimalen Pfad durch das Netzwerk zu bestimmen, wobei der optimale Pfad gemäß Pfadkostenkomponenten bestimmt wird, die für Fähigkeit der jeweiligen Ports zum Datentransfer repräsentieren, wobei jede BPDU einen Brückenidentifizierer enthält, der für die Brücke steht, von dem die BPDU empfangen wurde, **dadurch gekennzeichnet, dass** das Verfahren folgende Schritte umfasst:
die Pfadkostenkomponente des Gruppenports wird auf Null gesetzt;
die Brückenidentifizierer aller Brücke in der Gruppe werden auf das gleiche gesetzt; und
jedes Mal, wenn eine Brücke (41) in der Gruppe (40) über einen anderen Port als den Gruppenport ein BPDU empfängt, wird die Brücke (41) dazu veranlasst, eine neue BPDU zu erzeugen und an den Gruppenport zu übertragen, wobei die neue BPDU den Brückenidentifizierer und den Portidentifizierer der empfangenen BPDU aufweist.

12. Verfahren nach Anspruch 11, bei welchem jede gruppierte Gruppe (41) eine MAC-Adresse aufweist, wobei der Brückenidentifizierer jeder Brücke in der Gruppe entsprechend der MAC-Adresse von einer der Brücken in der Gruppe bestimmt wird.

13. Verfahren nach Anspruch 11 oder Anspruch 12, bei welchem das STP einen Portidentifizierer verwendet, der jedem Brückenport zugeordneten ist und die Priorität des Ports repräsentiert, und das Verfahren ferner umfasst, dass jedem Port in der Gruppe von Brücken (40) ein eindeutiger Portidentifizierer zugeordnet wird.

14. Verfahren nach Anspruch 13, bei welchem die neue BPDU eine Gruppen-BPDU ist, welche ferner ein Anzeichen des Portidentifizierers und/oder der Port-Prioritätszahl des Brückenports enthält, bei welchen die empfangene BPDU empfangen wurde.

15. Verfahren nach einem der Ansprüche 11 bis 14, bei welchem das STP durch den IEEE 802.1D Standard definiert ist.

## Revendications

1. Pont (41) pour une utilisation dans un groupe de ponts (40) dans un réseau de communication, le réseau de communication disposant d'un certain nombre de dispositifs de communication couplés ensemble via un certain nombre de ponts, et fonctionnant selon un protocole en arbre recouvrant ("Spanning Tree Protocol" = STP), le pont comprenant :
un certain nombre de points d'accès pouvant être interconnectés (44,45,46) ;
un point d'accès de groupe (42) qui relie le pont groupé à un point d'accès de groupe correspondant d'au moins un autre pont groupé via une liaison de groupe (43), la liaison de groupe (43) étant prévue pour permettre aux points d'accès situés sur différents ponts groupés d'être interconnectés ; et
un processeur (48), le processeur étant adapté pour communiquer avec d'autres ponts situés sur le réseau, en utilisant des modules de données de protocole de pont ("Bridge Protocol Data Units" = BPDU) pour permettre que soit déterminé un trajet optimal à travers le réseau, dans lequel chaque module BPDU comprend un identificateur de pont représentatif du pont qui a généré le module BPDU, et dans lequel le trajet optimal est déterminé en fonction de composantes de coût de trajet qui représentent la capacité des points d'accès respectifs à transférer des données, **caractérisé en ce qu'**au point d'accès de groupe (42) est assigné une composante de coût de trajet nulle.

2. Pont (41) selon la revendication 1, dans lequel le processeur (48) est adapté pour fixer la composante de coût de trajet du point d'accès de groupe (42) à une valeur nulle et, chaque fois qu'un pont dans le groupe reçoit un module BPDU via un point d'accès autre que le point d'accès de groupe, pour provoquer la génération et la transmission par le pont d'un nouveau module BPDU vers le point d'accès de groupe (42), le nouveau module BPDU ayant l'identificateur de pont et l'identificateur de point d'accès du module BPDU reçu.

3. Pont (41) selon la revendication 2, le pont comprenant une mémoire (49) qui est adaptée pour mémoriser l'identificateur de pont et la composante de coût de trajet associés à chaque point d'accès respectif.

4. Pont selon la revendication 3, dans lequel le protocole STP est adapté pour utiliser un identificateur de point d'accès associé à chaque point d'accès de pont, l'identificateur de point d'accès représentant la priorité du point d'accès, et dans lequel l'identificateur de point d'accès de chaque point d'accès dans le pont est mémorisé dans la mémoire (49).

5. Pont (41) selon la revendication 4, dans lequel le nouveau module BPDU est un module BPDU de groupe qui comprend en outre une indication de l'identificateur de point d'accès du point d'accès du pont auquel le module BPDU reçu a été reçu.

6. Pont (41) selon l'une quelconque des revendications précédentes, dans lequel le pont comprend une mémoire de transfert (47) qui est adaptée pour mémoriser des données reçues à un des points d'accès, avant de transférer les données vers un ou plusieurs des autres points d'accès.

7. Groupe de ponts (40) comprenant un certain nombre de ponts (41a-d) selon l'une quelconque des revendications 1 à 6, les ponts étant couplés via une liaison de groupe (43) qui est adaptée pour interconnecter les points d'accès de groupe sur différents ponts dans le groupe.

8. Groupe de ponts (40) selon la revendication 7, dans lequel l'identificateur de pont de chaque pont situé dans le groupe de ponts est identique.

9. Groupe de ponts (40) selon la revendication 8, dans lequel chaque pont dispose d'une adresse respective de contrôle d'accès au support ("Medium Access Control" = MAC), l'identificateur de pont de chaque pont groupé étant déterminé en fonction de l'adresse MAC d'un des ponts dans le groupe.

10. Groupe de ponts (40) selon l'une quelconque des revendications 7 à 9, lorsqu'elle dépend de la revendication 5, dans lequel les identificateurs de points d'accès sont différents pour chaque point d'accès de pont de chaque pont groupé.

11. Procédé de mise en oeuvre d'un protocole en arbre recouvrant ("Spanning Tree Protocol" = STP) sur un réseau de communication comprenant un certain nombre de ponts groupés (41), le réseau de communication disposant d'un certain nombre de dispositifs de communication reliés ensemble via un certain nombre de ponts, chaque pont groupé disposant d'un certain nombre de points d'accès (42, 44, 45, 46) pouvant être interconnectés, comprenant un point d'accès de groupe (42) qui couple le pont groupé à un point d'accès de groupe correspondant d'un autre pont groupé via une liaison de groupe (43), la liaison de groupe (43) étant prévue pour permettre à des points d'accès situés sur des ponts groupés différents d'être interconnectés, dans lequel le protocole STP provoque la communication l'un avec l'autre des ponts situés dans le réseau, en utilisant des modules de données de protocole de pont ("Bridge Protocol Data Units" = BPDU) pour déterminer un trajet optimal à travers le réseau, le trajet optimal étant déterminé en fonction de composantes de coût de trajet représentatives de le capacité des points d'accès respectifs de transférer des données, dans lequel chaque module BPDU comprend un identificateur de pont représentatif du pont à partir duquel le module BPDU a été reçu, **caractérisé en ce que** le procédé comprend les étapes consistant à :
fixer la composante de coût de trajet du point d'accès de groupe à une valeur nulle ;
fixer l'identificateur de pont de chaque pont situé dans le groupe à une valeur égale ; et,
chaque fois qu'un pont (41) dans le groupe (40) reçoit un module BPDU via un point d'accès autre que le point d'accès de groupe, provoquer une génération et une transmission par le pont (41) d'un nouveau module BPDU vers le point d'accès de groupe, le nouveau module BPDU ayant l'identificateur de pont et l'identificateur de point d'accès du module BPDU reçu.

12. Procédé selon la revendication 11, dans lequel chaque pont groupé (41) possède une adresse respective de contrôle d'accès au support ("Medium Access Control" = MAC), l'identificateur de pont de chaque pont situé dans le groupe étant déterminé en fonction de l'adresse MAC d'un des ponts dans le groupe.

13. Procédé selon la revendication 11 ou la revendication 12, dans lequel le protocole STP utilise un identificateur de point d'accès associé à chaque point d'accès de pont, l'identificateur de point d'accès représentant la priorité du point d'accès, le procédé comprenant en outre l'assignation d'un identificateur unique de point d'accès à chaque point d'accès dans le groupe de ponts (40).

14. Procédé selon la revendication 13, dans lequel le nouveau module BPDU est un module BPDU de groupe qui comprend en outre une indication de l'identificateur de point d'accès et/ou du nombre de priorité de point d'accès, du point d'accès du pont auquel le module BPDU reçu a été reçu.

15. Procédé selon l'une quelconque des revendications 11 à 14, dans lequel le protocole STP est défini par la norme IEEE 802.1D.
